# EUROPÄISCHE PATENTSCHRIFT

(11) **EP 3 408 574 B1**
(45) Veröffentlichungstag und Bekanntmachung des Hinweises auf die Patenterteilung: **22.01.2020**
(21) Anmeldenummer: 17701504.7
(22) Anmeldetag: 26.01.2017
(51) Int. Cl.: F16L 37/091

(54) **KUPPLUNGSKÖRPER FÜR EINE STECKVERBINDUNG VON ROHRLEITUNGEN, INSBESONDERE KUNSTSTOFFROHRLEITUNGEN**
COUPLING BODY FOR A PLUG CONNECTION OF PIPELINES, IN PARTICULAR PLASTIC PIPELINES
ÉLÉMENT D'ACCOUPLEMENT POUR RACCORD À EMBOÎTEMENT DE CONDUITS, EN PARTICULIER DE CONDUITS EN MATIÈRE PLASTIQUE

(30) Priorität: 28.01.2016 DE 102016101533
(43) Veröffentlichungstag der Anmeldung: 05.12.2018
(60) Teilanmeldung: 19159003.3
(73) Patentinhaber: Voss Automotive GmbH, 51688 Wipperfürth (DE)
(72) Erfinder: HAGEN, Harald, 51688 Wipperfürth (DE); RÖHRIG, Lukas, 51709 Marienheide (DE); WASCHKEWITZ, Markus, 51702 Bergneustadt (DE); FRANGENBERG, Markus, 51789 Lindlar (DE)
(74) Vertreter: Patent- und Rechtsanwälte Dr. Solf & Zapf
(86) Internationale Anmeldenummer: PCT/EP2017/051625
(87) Internationale Veröffentlichungsnummer: WO 2017/129667

(56) Entgegenhaltungen:
- EP-A1- 1 215 434
- WO-A1-95/24581
- DE-A1- 3 923 579
- GB-A- 2 071 798
- US-A- 4 635 975

## Beschreibung

Die vorliegende Erfindung betrifft einen Kupplungskörper zum Steckanschluss von Rohrleitungen, insbesondere Kunststoffrohrleitungen, umfassend eine Überwurfschraube mit einem Schraubenschaft, an dessen in Einschraubrichtung vorderen Bereich ein Außengewindeabschnitt ausgebildet ist, und hieran sich entgegen der Einschraubrichtung ein Betätigungsabschnitt anschließt, und wobei in axialer Richtung durch die Überwurfschraube eine innere Durchgangsöffnung verläuft, wobei in der Durchgangsöffnung eine radial zur Längsachse nach innen gerichtete Anlageschulter vorhanden ist, auf der ein Halteelement, das als Zahnscheibe oder Zahnring ausgebildet ist, angeordnet ist, und in Einschraubrichtung gesehen dahinter in einer zur Durchgangsöffnung offenen Umfangsnut mit einem Nutgrund und zwei am Nutgrund endenden gegenüberliegenden Seitenwänden ein ringförmiges Dichtelement gelagert ist.

Bei einem derartigen Kupplungskörper des Standes der Technik hat sich herausgestellt, dass die die innere Abdichtung bewirkende Umfangsdichtung dauerhaft nicht in der Lage ist, eine zuverlässige Abdichtung zu gewährleisten, da zwischen der Rohrleitung und der Umfangsdichtung eine Spaltbildung auftritt.

Aus der DE 39 23 579 A1 ist ein Kupplungskörper der genannten Art bekannt, bei dem eine Verstärkungshülse in einer Aufnahmebohrung angeordnet ist, welche in das Rohrende hineinragt und radiale Einschnürung des Rohrendes im Bereich des Halterings verhindert. Dafür sind zusätzlich Montageschritte, sowie eine zusätzliche Verstärkungshülse notwendig, woraus ein Mehraufwand und Mehrkosten resultieren.

Aus der WO 95/24581 A1 ist ein Kupplungskörper bekannt, umfassend eine Überwurfschraube und ein Verschlusselement mit einem hülsenförmigen Außengewindeabschnitt, der in einen Innengewindeabschnitt einer Durchgangsöffnung der Überwurfschraube eingeschraubt ist.

Der vorliegenden Erfindung liegt die Aufgabe zu Grunde, eine zuverlässige Abdichtung durch die Umfangsdichtung zu gewährleisten, und zwar bei Kupplungskörpern, bei denen von einer Seite her die Montage des Zahnrings und der Umfangsdichtung nacheinander erfolgt.

Erfindungsgemäß wird dies durch die Merkmale des Anspruchs 1 erreicht. Die Erfindung basiert dabei auf der Erkenntnis, dass eine Einbuchtung bzw. Einschnürung der Rohrleitung, im Sinne einer Durchmesserverringerung durch das Eingraben der Zähne des Halterings am Umfang der eingesteckten Rohrleitung im Belastungsfall durch die Verwendung des erfindungsgemäßen Distanzelementes überbrückt wird. Dabei besitzt diese Einschnürung eine gewisse axiale Erstreckung. Durch die Verwendung des erfindungsgemäßen Distanzelementes wird diese von dem Haltering erzeugte Einschnürung überbrückt, und die Umfangsdichtung verläuft im eingesteckten Zustand des Rohres außerhalb der Einschnürung in einem Bereich der eingesteckten Rohrleitung, der eine unverformte Rohroberfläche aufweist. Hierdurch wird eine sichere und dauerhafte Abdichtung des Dichtspaltes zwischen der eingesteckten Rohrleitung und der Umfangsdichtung gewährleistet.

Weiterhin ist erfindungsgemäß in das in Einschraubrichtung hintere Ende einer Überwurfschraube des Kupplungskörpers ein Verschlusselement eingesetzt, das seinerseits eine Einstecköffnung für die einzusteckende Rohrleitung aufweist. Hierbei befindet sich zweckmäßigerweise im Innern der Einstecköffnung eine Umfangsdichtung zum Abdichten des Umfangsspaltes zwischen der eingesteckten Rohrleitung und dem Verschlusselement. Diese innere Dichtung dient im Wesentlichen zur Schmutzabdichtung. Das Verschlusselement ist erfindungsgemäß in die Überwurfschraube eingeschraubt, so dass es lösbar mit der Überwurfschraube verbunden ist.

Die tatsächliche notwendige Überbrückungslänge addiert sich aus der Länge des Distanzelementes, z. B. 3 mm, einem Abstand zu den Zähnen des als Zahnscheibe oder Zahnring ausgebildeten Halteelementes, z. B. 0,5 mm, und z. B. ein Drittel der axialen Länge der Umfangsnut, z. B. 2,4 mm, zur Aufnahme der Umfangsdichtung, z. B. 0,8 mm, und einem Durchmesser derselben von z. B. 1,8 mm. Mit den vorstehenden Maßangaben ergibt sich z. B. eine Überbrückungslänge von 4,3 mm. Erfindungsgemäß kann somit ein sehr kurzes und kostengünstiges Bauteil hergestellt werden.

Bei z. B. üblichen Rohrgrößen (Innendurchmesser x Wandstärke) 4 mm x 0,85 mm; 4 mm x 1 mm und 6 mm x 1,5 mm und PA11, 12 bzw. PA 66 Rohr nach DIN73378 (1.2.1996) bei einer Höchsttemperatur von 120 °C ist z. B. eine Länge des Distanzelementes von 3 mm vorteilhaft. Bei kleineren Rohrgrößen als den vorgenannten kann eine Länge des Distanzelementes z. B. von 2,5 mm ausreichend sein.

In einer erfindungsgemäßen Ausführungsform bildet die in Einschraubrichtung hintere Stirnfläche des Distanzelementes gleichzeitig die in Einschraubrichtung vordere Nutwand der die Umfangsdichtung aufnehmenden Umfangsnut, so dass sich der Distanzring im unmittelbaren Berührungskontakt mit der Umfangsdichtung befindet, d. h. die Umfangsdichtung stützt sich am Distanzring ab. Hierdurch werden die im Belastungsfall auftretenden Druckkräfte, die über den Zahnring auf das Distanzelement übertragen werden, unmittelbar in die Umfangsdichtung eingeleitet, was zu einer erhöhten Verpressung der Umfangsdichtung führt. Durch diese erhöhte Verpressung der Umfangsdichtung in der Umfangsnut wird eine Permeation des in der Rohrleitung befindlichen gasförmigen Mediums durch die Umfangsdichtung wesentlich verringert, was zu einer verbesserten Abdichtung führt.

Weiterhin kann es erfindungsgemäß von Vorteil sein, wenn in der Durchgangsöffnung der Überwurfschraube in deren in Einschraubrichtung vorderen Endabschnitt eine Einsteckbegrenzung als Anschlag für die eingesteckte Rohrleitung ausgebildet ist. Diese Einsteckbegrenzung gewährleistet zusätzlich, dass der Kupplungskörper in seinem aus einem Anschlussstück herausgeschraubten Zustand nicht auf der Rohrleitung verschiebbar ist.

Durch die Erfindung gemäß dem Kennzeichen des Anspruchs 1 und jeweils den in den Unteransprüchen enthaltenen Merkmalen wird in Verbindung mit den Merkmalen des Anspruchs 1 ein Stecksystem insbesondere für gasförmige Medien bereitgestellt, das gegen den Innendruck sicher abgedichtet ist, und das aus dem Anschlussstück mit dem gesamten Kupplungsstück einschließlich der eingesteckten Rohrleitung demontiert werden und wieder montiert werden kann, und zudem sich im demontierten Zustand der Kupplungskörper nicht auf der Rohrleitung verschieben lässt.

Anhand der in den nachfolgenden Figuren dargestellten Ausführungsbeispiele wird die Erfindung näher erläutert. Es zeigen:
- Fig. 1: einen Kupplungskörper in einer Figurenhälfte in Ansicht, in der anderen Figurenhälfte im Längsschnitt, mit einem nicht erfindungsgemäßen Verschlusselement,
- Fig. 2: einen Kupplungskörper gemäß Figur 1, mit eingesteckter Rohrleitung,
- Fig. 3: eine weitere Ausführungsform eines Kupplungskörpers in einer Figurenhälfte in Ansicht und in der anderen Figurenhälfte im Längsschnitt, mit einem nicht erfindungsgemäßen Verschlusselement,
- Fig. 4: den Kupplungskörper gemäß Figur 3 mit eingesteckter Rohrleitung,
- Fig. 5 u. 6: Ausführungsformen eines erfindungsgemäßen Kupplungskörpers in einer Figurenhälfte in Ansicht und in der anderen Figurenhälfte im Längsschnitt,
- Fig. 7: eine weitere Ausführungsform eines erfindungsgemäßen Kupplungskörpers in einer Figurenhälfte in Ansicht und in der anderen Figurenhälfte im Längsschnitt, und
- Fig. 8: eine Detailansicht im Längsschnitt eines Distanzelementes mit dem zugehörigen Halteelement.

In den verschiedenen Figuren der Zeichnung sind gleiche bzw. funktionsgleiche Teile stets mit denselben Bezugszeichen versehen.

Zu der anschließenden Beschreibung wird beansprucht, dass die Erfindung nicht auf die Ausführungsbeispiele beschränkt ist.

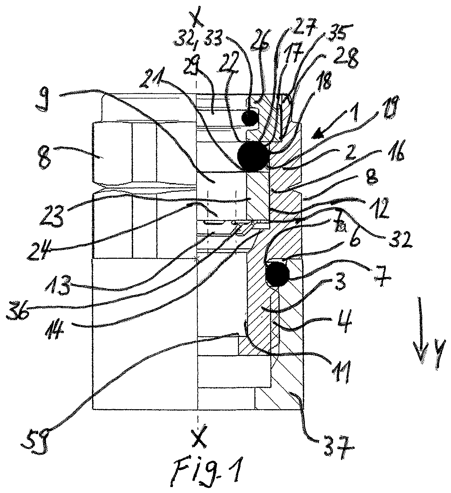

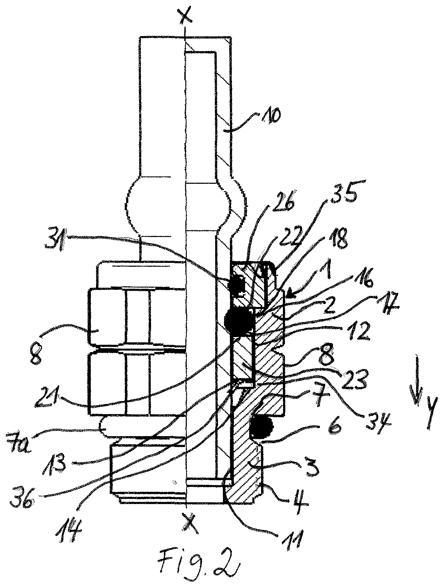

Wie zum Beispiel anhand Figur 1 erläutert wird, umfasst ein Kupplungskörper 1 zum Anschluss durch Einstecken einer in Figur 1 nicht dargestellten Rohrleitung, zum Beispiel aus Kunststoff, eine Überwurfschraube 2 mit einem Schraubenschaft 3. An seinem in Einschraubrichtung Y vorderen Bereich weist der Schraubenschaft 3 einen Außengewindeabschnitt 4 auf. Der Außengewindeabschnitt 4 besitzt insbesondere ein metrisches Außengewinde. Vorzugsweise schließt sich entgegen der Einschraubrichtung Y ein Dichtungsabschnitt 6 an, der eine umfänglich verlaufende Dichtungsnut 7 besitzt, in der eine ringförmige Dichtung 7a angeordnet sein kann. Weiterhin weist die Überwurfschraube 2 einen Betätigungsabschnitt 8 auf, der sich entgegen der Einschraubrichtung Y vom Schraubenschaft 3 weg erstreckt. Dieser Bestätigungsabschnitt 8 ist insbesondere als Außenmehrkant, insbesondere Außensechskant ausgebildet. Die Überwurfschraube 2 weist eine innere Durchgangsöffnung 9 auf, in die die anzuschließende Rohrleitung 10, siehe Fig. 2, eingesteckt wird. Die Durchgangsöffnung 9 besitzt insbesondere einen in Einschraubrichtung Y gesehen vorderen Führungsabschnitt 11 und einen in Einschraubrichtung Y hinter diesem sich anschließenden Halte- und Dichtungsabschnitt 12. Wie in Fig. 2 zu erkennen ist, weist der Führungsabschnitt 11 einen Innendurchmesser auf, der dem Außendurchmesser der Rohrleitung 10 derart angepasst ist, dass diese in diesem Führungsabschnitt 11 umfangsgemäß geführt ist. Weiterhin ist am in Einschraubrichtung Y gesehen vorderen Bereich der Durchgangsöffnung 9 ein Halteelement 13 angeordnet, mit dem die anzuschließende und durch die Durchgangsöffnung 9 hindurch gesteckte Rohrleitung 10 in ihrer Lage innerhalb des Kupplungskörpers 1 fixierbar ist. Dieses Halteelement 13 ist als Zahnscheibe oder Zahnring ausgebildet und liegt auf einer in der Durchgangsöffnung 9 ausgebildeten Anlageschulter 14 auf. Diese am Innenumfang der Durchgangsöffnung 9 verlaufende Anlageschulter 14 entsteht durch eine Durchmesserverringerung der Durchgangsöffnung 9, vorzugsweise am Übergang, der konisch ausgebildet ist, zum Führungsabschnitt 11. Der Halte- und Dichtabschnitt 12 weist zum Beispiel einen größeren Außendurchmesser auf als der Außengewindeabschnitt 4. In seiner inneren Umfangsfläche 16 besitzt der Halte- und Dichtabschnitt 12 in einer inneren Umfangsnut 17 ein ringförmiges Dichtelement 18 als Innendichtung, die zum Abdichten des bestehenden Umfangsspaltes zwischen der eingesteckten Rohrleitung 10 und dem Halte- und Dichtabschnitt 12 dient gegen Austritt eines in der Rohrleitung 10 vorhandenen Druckmediums. Vorzugsweise ist das ringförmige Dichtelement 18 als ein O-Dichtring ausgebildet und besteht aus einem elastisch verformbaren Material. Die Umfangsnut 17 weist einen Nutgrund 19 auf, der axial in Einschraubrichtung Y verläuft und einander gegenüberliegende, im Nutgrund 19 endende Nut-Seitenwände 21, 22 besitzt, so dass die Umfangsnut 17 im Längsschnitt gesehen U-förmig ausgebildet ist. Die Seitenwände 21, 22 verlaufen vorzugsweise senkrecht zum Nutgrund 19.

Zwischen dem Halteelement 13 und dem Dichtelement 18 ist ein hülsenförmiges Distanzelement 23 angeordnet. Das Distanzelement 23 weist eine Durchstecköffnung 24 auf, die dem Außendurchmesser der einzusteckenden Rohrleitung 10 angepasst ist. Das Halteelement 13 ist zwischen einem in Einschraubrichtung Y vorderen Stirnende des Distanzelementes 23 und der Anlageschulter 14 gehalten. Die in Einschraubrichtung Y hintere Stirnfläche des Distanzelementes 23 bildet die in Einschraubrichtung Y vordere Seitenwand 21 der inneren Umfangsnut 17.

Bei dem in Fig. 1 und 2 gezeigten Ausführungsbeispiel wirkt das Distanzelement 23 unmittelbar auf das Dichtelement 18 ein. Im gezeigten Ausführungsbeispiel ist in die Durchgangsöffnung 9 in ihrem oberen, in Einschraubrichtung Y gesehen hinteren Abschnitt ein nicht erfindungsgemäßes Verschlusselement 26 eingesetzt, das derart ausgebildet ist, dass seine in Einschraubrichtung Y vordere Stirnfläche die in Einschraubrichtung Y hintere Nutwand 22 der inneren Umfangsnut 17 bildet. Zudem liegt das nicht erfindungsgemäße Verschlusselement 26 im eingesetzten Zustand mit seiner vorderen Stirnfläche 27 an einer Stufenfläche 28 in der Durchgangsöffnung 9 an. Innerhalb dieses Verschlusselementes 26 ist eine Durchstecköffnung 29 für die einzusteckende Rohrleitung 10 ausgebildet, und in der inneren Umfangsfläche der Durchstecköffnung 29 des Verschlusselementes 26 ist eine Dichtungsanordnung 31 aus einer Innennut 32 und einem Dichtring 33 vorgesehen, der die eingesteckte Rohrleitung 10 umfangsgemäß gegen das Eindringen von Schmutzpartikeln abdichtet.

Das hülsenförmige Distanzelement 23 ist in seiner Länge in axialer Richtung derart dimensioniert, dass im Belastungsfall des Halteelementes 13, d. h. der Zahnscheibe oder des Zahnrings, durch das Eingreifen der Zähne in die Umfangswandung der eingesteckten Rohrleitung 10 eine in dieser auftretende Einbuchtung im Sinne einer Außendurchmesser- und gegebenenfalls auch Innendurchmesserreduzierung überbrückt wird, so dass die Umfangsdichtung, d. h. das Dichtelement 18 im Bereich der unverformten Rohrleitung 10 verläuft, so dass das Dichtelement 18 in seiner Dichtwirkung gegenüber der eingesteckten Rohrleitung 10 nicht beeinträchtigt wird, wenn im Belastungsfall die Rohrleitung 10 und der Kupplungskörper 1 von einem in der Rohrleitung 10 vorhandenen Druckmedium, insbesondere einem gasförmigen Medium, mit Druck beaufschlagt werden. In diesem Belastungsfall wird die Rohrleitung 10 an ihrem freien Rohrleitungsende derart an ihrer endseitigen Stirnfläche mit Druck beaufschlagt, dass die Rohrleitung 10 entgegen der Einschraubrichtung Y aus dem Kupplungskörper 1 herausgedrückt wird. Hierbei graben sich die Zähne des Halteelementes 13 in die Wandung der Rohrleitung 10 ein und verhindern ein Lösen der Rohrleitung 10 aus dem Kupplungskörper 1. Hierbei basiert die Erfindung auf der Erkenntnis, dass durch das Eingraben und die dabei radial gerichteten Kräfte der Zähne die im Obigen beschriebene Einbuchtung der Wandung der Rohrleitung 10 entsteht. Eine derartige Einbuchtung kann zum Beispiel eine axiale Länge von 2 bis 3 mm besitzen. Die Größe der Einbuchtung hängt insbesondere von der Dimensionierung der Rohrleitung 10, dem Material der Rohrleitung 10, der jeweilig herrschenden Temperatur und den auftretenden Druckkräften und der Gestalt des Halteelementes 13 ab.

Bei der in den Figuren 1 und 2 gezeigten Ausführungsform, bei der insbesondere das Distanzelement 23 im Querschnitt gesehen einen kreisförmigen Ringquerschnitt besitzt, wird das Distanzelement 23 bei Druckbeaufschlagung der Rohrleitung 10 von dem Halteelement 13 gegen das Dichtelement 18 gedrückt. Hierdurch erhöht sich die Verpressung des Dichtelementes 18 innerhalb der Umfangsnut 17, so dass die Flächenpressung des Dichtelementes 18 an seinen Anlageflächen der Umfangsnut 17 und an der Umfangsfläche 16 der eingesteckten Rohrleitung 10 erhöht wird. Durch diese Verpressung des Dichtelementes 18 verringert sich die Größe der Stoff- bzw. Gasaustrittsfläche des Dichtelementes 18 im Bereich des Dichtspaltes zwischen der eingesteckten Rohrleitung 10 und der inneren Umfangswandung der Durchgangsöffnung 9 im Bereich in Einschraubrichtung Y gesehen hinter der Innendichtung bzw. dem Dichtelement 18. Somit ermöglicht die Anordnung des Distanzelementes 23, dass es bei Druckbeaufschlagung der Rohrleitung 10 gegen die Innendichtung bzw. das Dichtelement 18 gedrückt wird, und eine erhöhte Dichtheit aufgrund der Verringerung der Permeation des Druckmediums, insbesondere Gas bzw. Luft, durch das Dichtelement 18.

Ein gemäß der Erfindung verwendetes Halteelement 13 besitzt einen äußeren umfangsgemäß ausgebildeten Auflageabschnitt 34, an dem radial und axial, d. h. schräg zur Längsachse X-X verlaufende Zähne 36 umfangsgemäß beabstandet zueinander ausgeformt sind. Der Außendurchmesser des Halteelementes 13 im Bereich seines Auflageabschnitts 34 ist derart, dass das Halteelement 13 innerhalb des Halte- und Dichtabschnitts 12 frei verdrehbar gelagert ist.

Wie in Fig. 1 dargestellt ist, wird der Kupplungskörper 1 mit seinem Außengewindeabschnitt 4 in einen Anschlusskörper 37 in eine Gewindebohrung eingeschraubt.

Die Zähne 36 des Halteelementes 13 umschließen endseitig eine Öffnung, deren Innendurchmesser kleiner ist als der Außendurchmesser der einzusteckenden Rohrleitung 10, so dass beim Einstecken der Rohrleitung 10 die von den Zähnen umschlossene Öffnung im Durchmesser vergrößert wird, indem die Zähne 36 elastisch verformt werden und im eingesteckten, noch drucklosen Zustand der Rohrleitung 10 kraftschlüssig am Umfang der Rohrleitung 10 aufliegen.

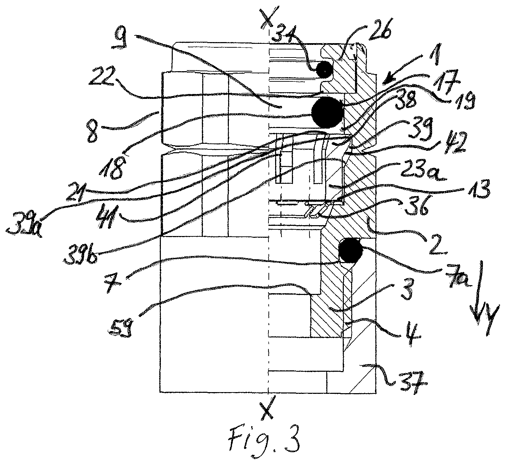

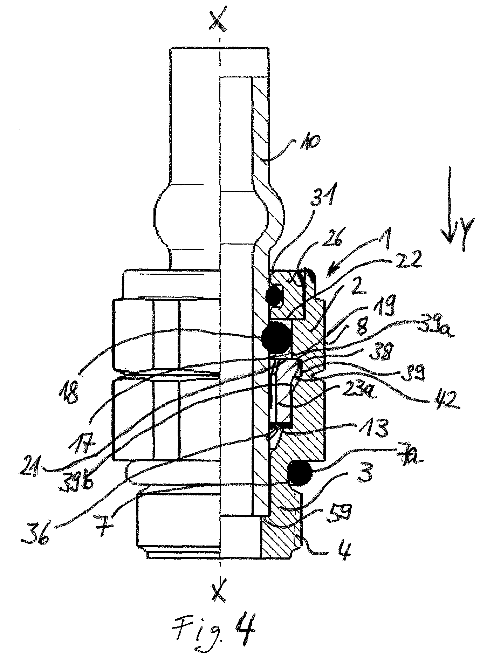

In den Figuren 3 und 4 ist eine weitere Ausbildung eines nicht erfindungsgemäßen hülsenförmigen Distanzelementes 23a gezeigt. Dieses Distanzelement 23a besitzt an seinem in Einschraubrichtung Y hinteren Endbereich an seinem äußeren Umfang einen umlaufenden Haltebund 38. Dieser Haltebund 38 ist innerhalb einer zur Durchgangsöffnung 9 offenen Haltenut 39 in der inneren Umfangswandung im Bereich des Halte- und Dichtabschnitts 12 der Durchgangsöffnung 9 rastend angeordnet. Hierzu ist das Distanzelement 23a zumindest im Bereich des Haltebundes 38 radial elastisch verformbar ausgebildet, wozu insbesondere in der Wandung des Distanzelementes 23a axial verlaufende, umfangsgemäß beabstandete Schlitze 41 ausgebildet sind. Es kann aber auch nur ein durchgehender Schlitz vorhanden sein. Das Distanzelement 23a ist zwischen dem auf der Anlageschulter 14 angeordneten Halteelement 13, d. h. der Zahnscheibe bzw. dem Zahnring, und einer in Einschraubrichtung Y gesehen hinteren Seitenwand 39a der Haltenut 39 gelagert. Hierdurch werden die auf das Halteelement 13 wirkenden Druckkräfte im Belastungsfall über diese Seitenwand 39a der Haltenut 39 auf die Überwurfschraube 2 übertragen und wirken nicht auf das Dichtelement 18, so dass das Dichtelement 18 druckmäßig entlastet wird. Der Haltebund 38 und die Haltenut 39 können auch an einer anderen Stelle des Distanzelementes 23a angeordnet sein.

Damit ein Einrasten des Haltebundes 38 hinter der Seitenwand 39a erleichtert wird, besitzt dieser vorteilhafterweise an seiner in Einschraubrichtung Y weisenden Stirnfläche eine Einführungsschräge 42. Zweckmäßigerweise ist die der Einführungsschräge 42 zugekehrte Seitenwand 39b der Haltenut 39 entsprechend abgeschrägt. Auch bei dieser Ausführungsform der Figuren 3 und 4 wird die vordere Seitenwand 21 der Umfangsnut 17 für das Dichtelement 18 von der in Einschraubrichtung Y gesehen hinteren Stirnfläche des Distanzelementes 23a gebildet, und die andere, gegenüberliegende Seitenwand 22 der Umfangsnut 17 wird von dem Verschlusselement 26 gebildet. Was die Ausbildung des nicht erfindungsgemäßen Verschlusselementes 26 und dessen Befestigung betrifft, so wird auf die Beschreibung zu den Figuren 1 und 2 voll umfänglich verwiesen.

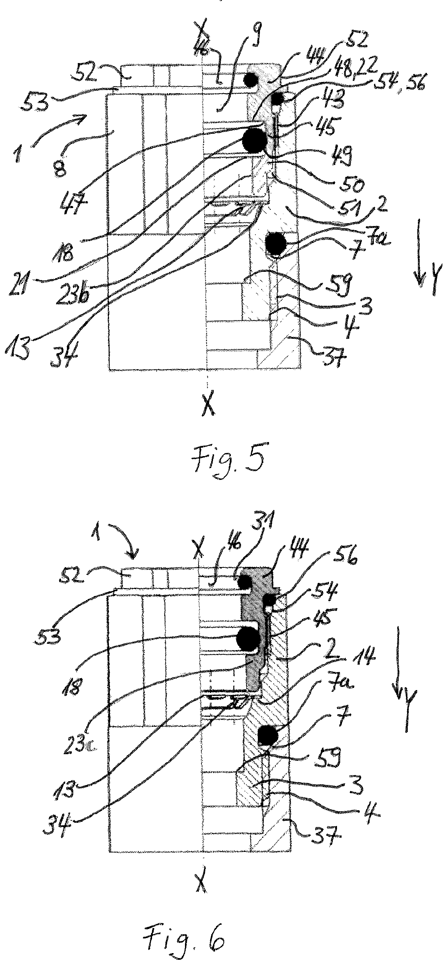

In Figur 5 ist eine Ausführung des erfindungsgemäßen Kupplungskörpers 1 dargestellt. Erfindungsgemäß weist die Überwurfschraube 2 in ihrer Durchgangsöffnung 9 im in Einschraubrichtung Y gesehen hinteren Endbereich einen Innengewindeabschnitt 43 auf, in diesem ist ein Verschlusselement 44 mit einem hülsenförmigen Außengewindeabschnitt 45 eingeschraubt. Dieses Verschlusselement 44 besitzt eine Durchstecköffnung 46 für die Rohrleitung 10 und im Bereich seines Außengewindeabschnitts 45 eine Ausnehmung 47 mit einer senkrecht zur Längsachse X-X verlaufenden, in Einschraubrichtung Y hinteren Seitenwand 48 und einem Ausnehmungsgrund 49, der in axialer Richtung verläuft. Die Seitenwand 48 bildet die hintere Nutwand 22 der Umfangsnut 17, und der Ausnehmungsgrund 49 deren Nutgrund 19. Ein Distanzelement 23b bildet mit seiner hinteren Stirnfläche die vordere Nutwand 21. Der Außengewindeabschnitt 45 ist hülsenförmig ausgebildet und umfasst das Dichtelement 18. Zwischen dem in Einschraubrichtung Y vorderen Stirnende des Außengewindeabschnitts 45 und dem Halteelement 13 ist das hülsenförmige Distanzelement 23b angeordnet und gehalten, das an seinem in Einschraubrichtung Y hinteren Bereich an seinem Außenumfang einen Haltebund 50 besitzt, der in einer Haltenut 51, gebildet von dem Außengewindeabschnitt 45 und der Überwurfschraube 2, angeordnet ist. In der vom Verschlusselement 44 und dem Distanzelement 23b gebildeten Umfangsnut 17 ist das Dichtelement 18 angeordnet. Das Distanzelement 23b liegt mit seiner Stirnfläche seines Haltebundes 50 an dem gegenüberliegenden Ende des Außengewindeabschnitts 45 an und überträgt die auf das Distanzelement 23b wirkenden Druckkräfte im Belastungsfall auf die Überwurfschraube 2, so dass die Innendichtung bzw. das Dichtelement 18 kräftemäßig entlastet wird.

Das Verschlusselement 44 besitzt an seinem in Einschraubrichtung Y hinteren Abschnitt seiner Durchstecköffnung 46 die Dichtungsanordnung 31 zum Abdichten gegen das Eindringen von Schmutz. Des Weiteren besitzt das Verschlusselement 44 einen umfangsgemäßen Betätigungsabschnitt 52, der zum Beispiel als Mehrkant, insbesondere Sechskant, ausgebildet sein kann. Dieser Betätigungsabschnitt 52 liegt außerhalb der Durchgangsöffnung 9 und weist einen umfangsgemäßen Anschlag 53 auf, mit dem die Einschraubtiefe des Verschlusselementes 44 in der Durchgangsöffnung 9 begrenzt wird. Zwischen dem Betätigungsabschnitt 52 und dem Außengewindeabschnitt 45 ist eine umlaufende Nut 54 zum Aufnehmen einer ringförmigen Dichtung 56 zum Abdichten der Gewindeabschnitte gegen den Austritt des im Innern der Durchgangsöffnung 9 im Belastungsfall befindlichen Mediums.

In Figur 6 ist eine Ausführung eines erfindungsgemäßen Kupplungskörpers 1 und der Überwurfschraube 2 dargestellt, bei der in Weiterbildung der Ausführungsform gemäß Fig. 5 das Distanzelement 23c mit dem Verschlusselement 44 ein einheitliches, einstückiges Bauteil bildet. Die Verbindung des Distanzelementes 23c mit dem Verschlusselement 44 erfolgt im Bereich des Endes des Außengewindeabschnitts 45 und im Bereich des Haltebundes 50. Im Übrigen entspricht die in Fig. 6 gezeigte Ausbildung derjenigen von Fig. 5.

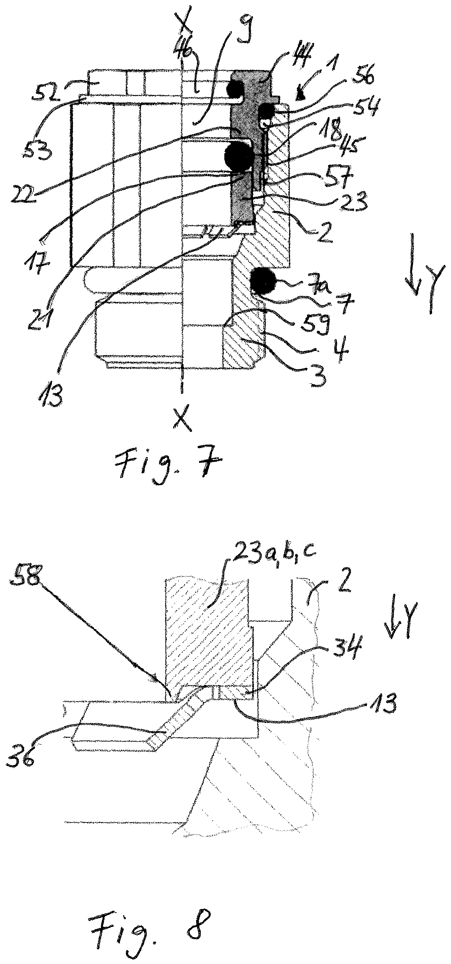

In Figur 7 ist eine weitere Ausbildung eines erfindungsgemäßen Kupplungskörpers 1 dargestellt. Diese Ausbildung zeigt eine Kombination des Distanzelementes 23 gemäß Fig. 1 mit einem Einschraubteil bzw. Verschlusselement 44 gemäß Fig. 5 bei einer erfindungsgemäßen Überwurfschraube 2. Bei dieser Ausführung bildet das Verschlusselement 44 im Bereich des Außengewindeabschnitts 45 gemeinsam mit dem Distanzelement 23 die Umfangsnut 17 zur Aufnahme des Dichtelementes 18. Das Verschlusselement 44 umschließt das Distanzelement 23 mit einem in Einschraubrichtung Y am vorderen Ende ausgebildeten Verlängerungsabschnitt 57, der in Einschraubrichtung Y vor dem Außengewindeabschnitt 45 liegt, und der mit oder ohne ein Außengewinde ausgebildet ist. Im eingeschraubten Zustand des Verschlusselementes 44 liegt der Verlängerungsabschnitt 57 zwischen dem Halte- und Dichtabschnitt 12 der Überwurfschraube 2 und dem Distanzelement 23 und endet mit einem Abstand vor der Zahnscheibe bzw. dem Halteelement 13.

In Figur 8 ist eine vorteilhafte Ausbildung der erfindungsgemäßen Distanzelemente gezeigt. Hierbei besitzt das Distanzelement 23, 23a, 23b, 23c an seinem in Einschraubrichtung Y vorderen Ende an dem Rand der Durchstecköffnung 24 eine in axialer Richtung abstehende Haltenase 58. Diese Haltenase 58 ist derart ausgebildet, dass sie vor den Zähnen 36 endet. Im Belastungsfall des Halteelementes 13 werden die Zähne 36 durch die Haltenase 58 abgestützt, so dass höhere Rohrauszugskräfte möglich sind. Hierbei liegt das beste Kräfteverhältnis vor, wenn die Zähne 36 in einem Winkel von 30° bis 60°, insbesondere 45° zur Rohrleitung 10 positioniert sind. Die Größe des Eingreifwinkels, insbesondere von 45°, kann durch die Größe der Haltenase 58 eingestellt werden. Zudem kann das auf das Halteelement 13 ausgeübte Drehmoment reduziert werden.

In den Figuren 2 und 4 ist die erfindungsgemäße Überwurfschraube 2 mit eingesteckter Rohrleitung 10 im ausgeschraubten Zustand aus dem Anschlusskörper 37 gezeigt. Die in der Überwurfschraube 2 eingesteckte Rohrleitung 10 bleibt bei dem Herausschrauben der Überwurfschraube 2 gesteckt. Dies ist erfindungsgemäß deshalb möglich, da erfindungsgemäß das Halteelement 13 in seinen Abmessungen derart bemessen ist, dass es frei drehbar um die Längsachse X-X innerhalb des Halte- und Dichtabschnitts 12 der Durchgangsöffnung 9 gelagert ist. Erfindungsgemäß dreht sich der Kupplungskörper 1 beim Herausdrehen aus dem Anschlusskörper 37 um die eingesteckte Rohrleitung 10 herum, so dass die eingesteckte Rohrleitung 10 sich nicht verwindet, denn das Halteelement 13 ist im montierten Zustand rotatorisch nicht fixiert.

Bei der erfindungsgemäßen Überwurfschraube 2 ist es von Vorteil, wenn am in Einschraubrichtung Y vorderen Ende der Durchgangsöffnung 9 ein Anschlagbund 59 durch eine Durchmesserreduzierung des Innendurchmessers ausgebildet ist. Dieser Anschlagbund 59 ist einerseits ein Tiefenanschlag, der beim Einstecken der Rohrleitung 10 deren Einstecktiefe begrenzt, und andererseits verhindert er, dass im ausgeschraubten Zustand der Überwurfschraube 2 sich der Kupplungskörper 1 aus dem Anschlusskörper 37 auf der eingesteckten Rohrleitung 10 axial verschieben lässt. Vorteilhafterweise ist der Innendurchmesser des Anschlagbundes 59 größer als der Innendurchmesser der anzuschließenden Rohrleitung 10 oder gleich dem Innendurchmesser der Rohrleitung 10, so dass der innere Rohrquerschnitt nicht unterschritten wird, und somit Strömungsverluste vermieden werden.

### Bezugszeichen

- 1: Kupplungskörper
- 2: Überwurfschraube
- 3: Schraubenschaft
- 4: Außengewindeabschnitt
- 6: Dichtungsabschnitt
- 7: Dichtungsnut
- 7a: Dichtung
- 8: Betätigungsabschnitt
- 9: Durchgangsöffnung
- 10: Rohrleitung
- 11: Führungsabschnitt
- 12: Halte- und Dichtungsabschnitt
- 13: Halteelement
- 14: Anlageschulter
- 16: Innere Umfangsfläche
- 17: Innere Umfangsnut
- 18: Dichtelement
- 19: Nutgrund
- 21: Vordere Seitenwand
- 22: Hintere Seitenwand
- 23 a,b,c: Distanzelement
- 24: Durchstecköffnung des Distanzelementes
- 26: Verschlusselement
- 27: Vordere Stirnfläche
- 28: Stufenfläche
- 29: Durchstecköffnung des Verschlusselementes
- 31: Dichtungsanordnung
- 32: Innennut
- 33: Dichtring
- 34: Auflageabschnitt
- 35: Bördelfortsatz
- 36: Zähne
- 37: Anschlusskörper
- 38: Haltebund
- 39: Haltenut
- 39a,b: Seitenwand
- 41: Schlitze
- 42: Einführungsschräge
- 43: Innengewindeabschnitt
- 44: Verschlusselement
- 45: Außengewindeabschnitt
- 46: Durchstecköffnung
- 47: Ausnehmung
- 48: Hintere Seitenwand
- 49: Ausnehmungsgrund
- 50: Haltebund
- 51: Haltenut
- 52: Betätigungsabschnitt
- 53: Anschlag
- 54: Nut
- 56: Dichtung
- 57: Verlängerungsabschnitt
- 58: Haltenase
- 59: Anschlagbund

- X-X: Längsachse
- Y: Einschraubrichtung

## Patentansprüche

1. Kupplungskörper (1) zum Steckanschluss von Rohrleitungen (10), insbesondere Kunststoffrohrleitungen, umfassend eine Überwurfschraube (2) mit einem Schraubenschaft (3), an dessen in Einschraubrichtung (Y) vorderen Bereich ein Außengewindeabschnitt (4) ausgebildet ist, und hieran sich entgegen der Einschraubrichtung (Y) ein Betätigungsabschnitt (8) anschließt, und wobei in axialer Richtung durch die Überwurfschraube (2) eine innere Durchgangsöffnung (9) verläuft, wobei in der Durchgangsöffnung (9) eine radial zur Längsachse (X-X) nach innen gerichtete Anlageschulter (14) vorhanden ist, auf der ein Halteelement (13), das als Zahnscheibe oder Zahnring ausgebildet ist, angeordnet ist, und in Einschraubrichtung (Y) gesehen dahinter in einer zur Durchgangsöffnung (9) offenen Umfangsnut (17) mit einem Nutgrund (19) und zwei am Nutgrund (19) endenden gegenüberliegenden Seitenwänden (21, 22) ein ringförmiges Dichtelement (18) gelagert ist, wobei zwischen dem Halteelement (13) und dem ringförmigen Dichtelement (18) ein hülsenförmiges Distanzelement (23, 23a, 23b, 23c) angeordnet ist, wobei das Halteelement (13) zwischen der in Einschraubrichtung (Y) vorderen Stirnseite des Distanzelementes (23, 23a, 23b, 23c) und der Anlageschulter (14) in axialer Richtung gehalten ist und die in Einschraubrichtung (Y) vordere Seitenwand (21) der Umfangsnut (17) durch die in Einschraubrichtung (Y) hintere Stirnfläche des Distanzelementes (23, 23a, 23b, 23c) gebildet wird, und wobei in der Durchgangsöffnung (9) an ihrem in Einschraubrichtung (Y) hinteren Ende ein Verschlusselement 44) mit einer Durchstecköffnung (46) befestigt ist, das mit seiner vorderen Stirnfläche die hintere Seitenwand (22) der Umfangsnut (17) bildet, **dadurch gekennzeichnet, dass** das hülsenförmige Distanzelement (23, 23a, 23b, 23c) eine derartige Länge in axialer Richtung besitzt, dass eine im Belastungsfall des Halteelementes (13) durch Eingraben von Zähnen (36) des Halteelementes (13) in eine Umfangswandung der in die Durchgangsöffnung (9) eingesteckten Rohrleitung (10) erzeugte Einbuchtung von dem Distanzelement (23, 23a, 23b, 23c) derart überbrückt ist, dass das ringförmige Dichtelement (18) im Bereich der unverformten Rohrwandung anliegt und das Verschlusselement (44) an seiner in Einschraubrichtung (Y) weisenden Stirnseite einen den Nutgrund (19) und die Nutwand (22) der Umfangsnut (17) bildenden hülsenförmigen Außengewindeabschnitt (45) aufweist, und der Außengewindeabschnitt (45) in einen Innengewindeabschnitt (43) der Durchgangsöffnung (9) eingeschraubt ist.

2. Kupplungskörper (1) nach Anspruch 1,
**dadurch gekennzeichnet, dass** das Distanzelement (23, 23a, 23b, 23c) unmittelbar mit dem Dichtelement (18) unter gegenseitiger Anlage zusammenwirkt.

3. Kupplungskörper (1) nach Anspruch 1 oder 2,
**dadurch gekennzeichnet, dass** das hülsenförmige Distanzelement (23, 23a, 23b, 23c) einen zylindrischen Körper aufweist mit einem in Bezug auf die Längsachse (X-X) kreisringförmigen Querschnitt.

4. Kupplungskörper (1) nach einem der Ansprüche 1 bis 3,
**dadurch gekennzeichnet, dass** eine stirnseitige Endfläche des hülsenförmigen Außengewindeabschnitt (45) des Verschlusselements (44) eine Anschlagfläche für das Distanzelement (23) bildet.

5. Kupplungskörper (1) nach Anspruch 4,
**dadurch gekennzeichnet, dass** der hülsenförmige Außengewindeabschnitt (45) einen Verlängerungsabschnitt (57) aufweist, mit dem er das Distanzelement (23) umfasst.

6. Kupplungskörper (1) nach einem der Ansprüche 1 bis 5,
**dadurch gekennzeichnet, dass** am in Einschraubrichtung (Y) vorderen Ende der Durchgangsöffnung (9) ein Anschlagbund (59) durch eine Durchmesserreduzierung des Innendurchmessers ausgebildet ist, wobei insbesondere der Innendurchmesser des Anschlagbundes (59) größer/gleich dem Innendurchmesser einer einzusteckenden Rohrleitung (10) ist.

7. Kupplungskörper (1) nach einem der Ansprüche 1 bis 6,
**dadurch gekennzeichnet, dass** das Halteelement (13) in seinen Abmessungen derart bemessen ist, dass es frei drehbar innerhalb der Durchgangsöffnung (9) gelagert ist.

8. Kupplungskörper (1) nach einem der Ansprüche 1 bis 7,
**dadurch gekennzeichnet, dass** das Distanzelement (23, 23a, 23b, 23c) an seinem in Einschraubrichtung (Y) vorderen Ende an dem Rand der Durchstecköffnung (24) eine in axialer Richtung abstehende Haltenase (58) besitzt, die derart ausgebildet ist, dass sie vor den Zähnen (36) endet.

## Claims

1. Coupling body (1) for the plug connection of pipelines (10), in particular plastic pipelines, comprising a retaining screw (2) having a screw shaft (3), on the front region of which in the screw-in direction (Y) an externally threaded section (4) is formed, and the latter is adjoined counter to the screw-in direction (Y) by an actuating section (8), and wherein an inner passage opening (9) extends through the retaining screw (2) in the axial direction, wherein, in the passage opening (9), there is a contact shoulder (14) directed radially inwards towards the longitudinal axis (X-X), on which shoulder there is arranged a retaining element (13), which is formed as a toothed disc or toothed ring, and an annular sealing element (18) is supported behind the latter as viewed in the screw-in direction (Y) in a circumferential groove (17) that is open towards the passage opening (9) and has a groove base (19) and two opposite side walls (21, 22) ending at the groove base (19), wherein a sleeve-like spacer element (23, 23a, 23b, 23c) is arranged between the retaining element (13) and the annular sealing element (18), wherein the retaining element (13) is retained in the axial direction between the front side of the spacer element (23, 23a, 23b, 23c) in the screw-in direction (Y) and the contact shoulder (14), and the front side wall (21) of the circumferential groove (17) in the screw-in direction (Y) is formed by the rear end face of the spacer element (23, 23a, 23b, 23c) in the screw-in direction (Y), and wherein, in the passage opening (9), at its rear end in the screw-in direction (Y), a closure element (44) having a push-through opening (46) is fixed, which, with its front end face, forms the rear side wall (22) of the circumferential groove (17),
**characterized in that** the sleeve-like spacer element (23, 23a, 23b, 23c) has a length in the axial direction such that when the retaining element (13) is loaded, an indentation produced as a result of teeth (36) of the retaining element (13) being buried into a circumferential wall of the pipeline (10) plugged into the passage opening (9) is bridged by the spacer element (23, 23a, 23b, 23c) in such a way that the annular sealing element (18) makes contact in the region of the non-deformed pipe wall, and, on its end side pointing in the screw-in direction (Y), the closure element (44) has a sleeve-like externally threaded section (45) forming the groove base (19) and the groove wall (22) of the circumferential groove (17), and the externally threaded section (45) is screwed into an internally threaded section (43) of the passage opening (9).

2. Coupling body (1) according to Claim 1,
**characterized in that** the spacer element (23, 23a, 23b, 23c) interacts directly with the sealing element (18) with mutual contact.

3. Coupling body (1) according to Claim 1 or 2,
**characterized in that** the sleeve-like spacer element. (23, 23a, 23b, 23c) has a cylindrical body with a cross section that is annular in relation to the longitudinal axis (X-X).

4. Coupling body (1) according to one of Claims 1 to 3,
**characterized in that** a front end face of the sleeve-like externally threaded section (45) of the closure element (44) forms a contact face for the spacer element (23).

5. Coupling body (1) according to Claim 4,
**characterized in that** the sleeve-like externally threaded section (45) has an extension section (57), with which it encompasses the spacer element (23).

6. Coupling body (1) according to one of Claims 1 to 5,
**characterized in that** at the front end of the passage opening (9) in the screw-in direction (Y), a stop collar (59) is formed by a reduction in the diameter of the internal diameter, wherein in particular the internal diameter of the stop collar (59) is larger than/equal to the internal diameter of a pipeline (10) to be plugged in.

7. Coupling body (1) according to one of Claims 1 to 6,
**characterized in that** the retaining element (13) is dimensioned in such a way that it is freely rotatably supported within the passage opening (9).

8. Coupling body (1) according to one of Claims 1 to 7,
**characterized in that** the spacer element (23, 23a, 23b, 23c) has, at its front end in the screw-in direction (Y), a retaining lug (58) projecting in the axial direction at the edge of the plug-in opening (24), which retaining lug is formed in such a way that it ends before the teeth (36).

## Revendications

1. Corps d'accouplement (1) destiné au raccordement par enfichage de conduites (10), en particulier de conduites en matière synthétique, le corps d'accouplement comprenant une vis chapeau (2) pourvue d'une tige de vis (3) au niveau de la région avant de laquelle, par référence au sens de vissage (Y), une partie filetée extérieure (4) est formée à laquelle se raccorde une partie d'actionnement (8) dans le sens opposé au sens de vissage (Y), et une ouverture de passage intérieure (9) étant ménagée dans la direction axiale à travers la vis chapeau (2), un épaulement d'appui (14), dirigé vers l'intérieur radialement à l'axe longitudinal (X-X) est prévu dans l'ouverture de passage (9), épaulement d'appui sur lequel est disposé un élément de retenue (13) qui est conçu sous la forme d'un disque denté ou d'une bague dentée et un élément d'étanchéité annulaire (18) étant logé, en arrière par référence au sens de vissage (Y), dans une gorge périphérique (17) ouverte vers l'ouverture de passage (9) et pourvue d'un fond de gorge (19) et de deux parois latérales opposées (21, 22) qui se terminent au niveau du fond de gorge (19), un élément d'espacement (23, 23a, 23b, 23c) en forme de manchon étant disposé entre l'élément de retenue (13) et l'élément d'étanchéité annulaire (18), l'élément de retenue (13) étant maintenu dans la direction axiale entre le côté frontal avant, par référence au sens de vissage (Y), de l'élément d'espacement (23, 23a, 23b, 23c) et l'épaulement d'appui (14) et la paroi latérale avant (21), par référence au sens de vissage (Y), de la gorge périphérique (17) étant formée par la face frontale arrière, par référence au sens de vissage (Y), de l'élément d'espacement (23, 23a, 23b, 23c) et un élément de fermeture (44) pourvu d'une ouverture traversante (46) étant fixé dans l'ouverture de passage (9) au niveau de l'extrémité arrière de celle-ci par référence au sens de vissage (Y), lequel élément de fermeture forme avec sa face frontale avant la paroi latérale arrière (22) de la gorge périphérique (17), **caractérisé en ce que** l'élément d'espacement (23, 23a, 23b, 23c) en forme de manchon a dans la direction axiale une longueur telle qu'un creux, généré en cas de sollicitation de l'élément de retenue (13) par enfoncement de dents (36) de l'élément de retenue (13) dans une paroi périphérique de la conduite (10) enfichée dans l'ouverture de passage (9), soit ponté par l'élément d'espacement (23, 23a, 23b, 23c) de manière à ce que l'élément d'étanchéité annulaire (18) vienne en appui dans la région de la paroi de conduite non déformée, et **en ce que** l'élément de fermeture (44) comporte sur son côté frontal dirigé dans le sens de vissage (Y) une partie filetée extérieure (45) en forme de manchon qui forme le fond de gorge (19) et la paroi de gorge (22) de la gorge périphérique (17) et **en ce que** la partie filetée extérieure (45) est vissée dans une partie filetée intérieure (43) de l'ouverture de passage (9).

2. Corps d'accouplement (1) selon la revendication 1, **caractérisé en ce que** l'élément d'espacement (23, 23a, 23b, 23c) coopère directement avec l'élément d'étanchéité (18) en appui l'un contre l'autre.

3. Corps d'accouplement (1) selon la revendication 1 ou 2,
**caractérisé en ce que** l'élément d'espacement (23, 23a, 23b, 23c) en forme de manchon comporte un corps cylindrique ayant une section transversale annulaire par rapport à l'axe longitudinal (X-X).

4. Corps d'accouplement (1) selon l'une des revendications 1 à 3, **caractérisé en ce qu'**une face côté frontal de la partie filetée extérieure (45) en forme de manchon de l'élément de fermeture (44) forme une face d'appui pour l'élément d'espacement (23).

5. Corps d'accouplement (1) selon la revendication 4, **caractérisé en ce que** la partie filetée extérieure (45) en forme de manchon comporte une partie d'extension (57) avec laquelle elle entoure l'élément d'espacement (23).

6. Corps d'accouplement (1) selon l'une des revendications 1 à 5,
**caractérisé en ce qu'**un collet de butée (59) est formé par réduction du diamètre intérieur à l'extrémité avant, par référence au sens de vissage (Y), de l'ouverture de passage (9), en particulier le diamètre intérieur du collet de butée (59) étant supérieur/égal au diamètre intérieur d'une conduite (10) à enficher.

7. Corps d'accouplement (1) selon l'une des revendications 1 à 6,
**caractérisé en ce que** l'élément de retenue (13) est dimensionné, en termes d'encombrement, de manière à être logé dans l'ouverture de passage (9) de façon à pouvoir tourner librement.

8. Corps d'accouplement (1) selon l'une des revendications 1 à 7,
**caractérisé en ce que** l'élément d'espacement (23, 23a, 23b, 23c) possède à son extrémité avant, par référence au sens de vissage (Y), au bord de l'ouverture traversante (24), un ergot de retenue (58) qui fait saillie dans la direction axiale et qui est conçu pour se terminer en avant des dents (36).
